# EUROPEAN PATENT SPECIFICATION

(11) **EP 4 481 432 B1**
(45) Date of publication and mention of the grant of the patent: **30.09.2026**
(21) Application number: 24183197.3
(22) Date of filing: 19.06.2024
(51) Int. Cl.: G01S 7/48, B60W 40/06, G01S 17/42, G01S 17/931, G01S 17/95

(54) **ESTIMATING SURFACE CONDITIONS ON A ROAD**
SCHÄTZUNG VON OBERFLÄCHENZUSTÄNDEN AUF EINER STRASSE
ESTIMATION DE CONDITIONS DE SURFACE SUR UNE ROUTE

(30) Priority: 20.06.2023 US 202318337964
(43) Date of publication of application: 25.12.2024
(73) Proprietor: Volvo Car Corporation, 405 31 Göteborg (SE)
(72) Inventor: JOHANSSON, Philip, 40531 Göteborg (SE); LE, Viet, 40531 Göteborg (SE); VIJAYAN, Arun Shenbaga Priyan, 40531 Göteborg (SE); YANG, Derong, 40531 Göteborg (SE); KARUNASEKERA, Hasith, 40531 Göteborg (SE)
(74) Representative: Kransell & Wennborg KB

(56) References cited:
- CN-A- 103 512 636
- US-A1- 2017 316 333
- US-A1- 2023 077 618
- DANAPAL GOKULESH ET AL: "Sensor fusion of camera and LiDAR raw data for vehicle detection", 2020 WORKSHOP ON COMMUNICATION NETWORKS AND POWER SYSTEMS (WCNPS), IEEE, 12 November 2020 (2020-11-12), pages 1 - 6, XP033863795, DOI: 10.1109/WCNPS50723.2020.9263724

## Description

### TECHNICAL FIELD

This application generally relates to a system, a computer implemented method, and a computer program product.

### BACKGROUND

Autonomous vehicles are becoming increasingly prevalent worldwide and are poised to become one of the most common modes of transportation. It can be desirable to determine road surface conditions to prevent, or substantially limit accidents for autonomous vehicles. Further, it can be desirable to actively survey a path in front of a vehicle to determine surface conditions to facilitate safe driving. Some examples are provided in publications of US 2023/077618 A1, US 2017/316333 A1, CN 103 512 636 A, and the article titled "Sensor fusion of camera and Lidar raw data for vehicle detection" by DANAPAL DOKULESH ET AL. in 2020 WORKSHOP ON COMMUNICATION NETWORKS AND POWER SYSTEMS (WCNPS).

The above-described background relating to autonomous vehicles and systems is merely intended to provide a contextual overview of some current issues and is not intended to be exhaustive. Other contextual information may become further apparent upon review of the following detailed description.

### SUMMARY

The following presents a summary to provide a basic understanding of one or more embodiments of the invention. In one or more examples described herein, systems, computer-implemented methods and/or computer program products are presented that facilitate estimating surface conditions on a road.

The invention is as defined in the appended set of claims.

In various implementations, the sensor component can emit one or more pulsed light waves that reflect off a surface of the road to be received by the sensor component to determine the distance between the surface and a vehicle. Additionally, the sensor component can emit one or more pulsed light waves that reflect off a surface of the road to be received by the sensor component to determine the reflectance value. Further, the road condition component can compare the heat map with one or more distributions of reflectance values representing one or more predefined surface conditions to determine the surface condition.

In various implementations, the road condition component can determine that the portion of the road can be dry, moist, slushy, or wet in response in response to receiving one or more returns with indexes of two, three, or four from one or more pulsed light waves transmitted by the sensor component. Additionally, the road condition component can determine that the portion of the road can be snowy or icy in response to receiving one or more returns with an index of five from the one or more pulsed light waves. Further, the road condition component can determine that the portion of the road includes a dry surface in response to reflectance values up to 0.125 for distances greater than 10 meters between the portion of the road and a vehicle.

In other examples, elements described in connection with the disclosed systems can be embodied in different forms such as computer implemented methods, computer program products, or other forms. According to the invention, a computer implemented method for estimating surface conditions on a road can is set out in the appended set of claims.

In various examples, the computer implemented method can comprise emitting, by the device, one or more pulsed light waves that can reflect off the surface of the road to determine the distance between the surface and a vehicle. Additionally, the computer implemented method can comprise emitting, by the device, one or more pulsed light waves that reflect off the surface of the road to determine the reflectance value of the surface. Further, the computer implemented method can comprise comparing, by the device, the heat map with one or more distributions of reflectance values representing one or more pre-defined surface conditions to determine the surface condition.

In various examples, the computer implemented method can comprise determining, by the device, that the portion of the road can be dry, moist, slushy, or wet in response to receiving one or more returns with indexes of two, three, or four from one or more pulsed light waves emitted towards the portion of the road. Additionally, the computer implemented method can comprise determining, by the device, that the portion of the road can be snowy or icy in response to receiving one or more returns with an index of five from the one or more pulsed light waves. Further, the computer implemented method can comprise determining, by the device, that the portion of the road includes a dry surface in response to reflectance values up to 0.125 for distances greater than 10 meters between the portion of the road and a vehicle.

According to the invention, a computer program product for estimating surface conditions on a road is set out in the appended set of claims.

In various examples that are not a part of the invention, the program instructions can cause the processor to emit one or more pulsed light waves that reflect off the surface of the road to determine the distance between the surface and a vehicle. Additionally, the program instructions can cause the processor to emit one or more pulsed light waves that reflect off the surface of the road to determine the reflectance value of the surface. Further, the program instructions that are not a part of the invention can cause the processor to compare the heat map with one or more distributions of reflectance values representing one or more pre-defined surface conditions to determine the surface condition.

In various examples, the program instructions that are not a part of the invention can cause the processor to determine that the portion of the road can be dry, moist, slushy, wet, snowy, or icy in response to receiving one or more returns with indexes of two, three, or four from one or more pulsed light waves emitted towards the portion of the road. Further, the program instructions that are not a part of the invention can cause the processor to determine that the portion of the road can be snowy or icy in response to receiving one or more returns with an index of five from the one or more pulsed light waves.

In some embodiments, elements described in connection with the disclosed systems and devices can be embodied in different forms such as a computer-implemented method, a computer program product, or another form.

### BRIEF DESCRIPTION OF THE DRAWINGS

FIG. 1 illustrates a block diagram of an exemplary system in accordance with one or more examples described herein, which is not a part of the invention.
FIG. 2 illustrates a block diagram of example, non-limiting computer executable components in accordance with the invention.
FIG. 3 illustrates an example, non-limiting scenario in accordance with the invention.
FIG. 4 illustrates an example frame from a vehicle camera and a corresponding surface condition graph, in accordance with the invention.
FIG. 5A illustrates a plurality of distributions of reflectance values for a variety of surface conditions, in accordance with the invention.
FIG. 5B illustrates a plurality of distributions of reflectance values for a variety of surface conditions, in accordance with the invention.
FIG. 6A illustrates a plurality of heat maps of reflectance values in comparison to distance for a variety of surface conditions, in accordance with the invention.
FIG. 6B illustrates a plurality of heat maps of reflectance values in comparison to distance for a variety of surface conditions, in accordance with the invention.
FIG. 7A illustrates a plurality of return index plots for a variety of surface conditions to determine a number of returns received, in accordance with the invention.
FIG. 7B illustrates a plurality of return index plots for a variety of surface conditions to determine a number of returns received, in accordance with the invention.
FIG. 8 illustrates a flow diagram for a computer-implemented methodology for estimating surface conditions on a road, in accordance with the invention.
FIG. 9 illustrates continued portions of a flow diagram for a computer-implemented methodology for estimating surface conditions on a road, in accordance with the invention.
FIG. 10 presents a schematic of a computing environment in which the various embodiments of the invention described herein can be implemented, which is not a part of the invention.
FIG. 11 is a schematic block diagram of a sample computing environment with which the disclosed subject matter can interact, which is not a part of the invention.

### DETAILED DESCRIPTION

The following detailed description is merely illustrative and is not intended to limit embodiments and/or application or uses of embodiments. Furthermore, there is no intention to be bound by any expressed or implied information presented in any of the preceding Background section, Summary section, and/or in this Detailed Description section.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, conductive coupling, acoustic coupling, ultrasound coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments the described herein.

The computer processing systems, computer-implemented methods, apparatus and/or computer program products described herein employ hardware and/or software to solve problems that are highly technical in nature (e.g., estimating surface conditions on a road), that are not abstract and cannot be performed as a set of mental acts by a human.

In various embodiments described herein, road friction and surface condition estimation can be used to predict the degree of safety of a road and can additionally alter the driving controls of a vehicle based on the detected safety level. For example and without limitation, in the field of autonomous driving, data obtained from a LiDAR sensor can be used for object detection and distance estimation. However, LiDAR sensors can be used for further applications, such as to estimate road state properties such as road surface condition. For example and without limitation, the LiDAR sensor can be used for determine if a portion of the road is dry, wet, snowy, slushy, icy, among others according to the reflectance value and distance. Further, the LiDAR sensor can survey the area in front of the vehicle regardless of natural light available to determine a surface condition for the road.

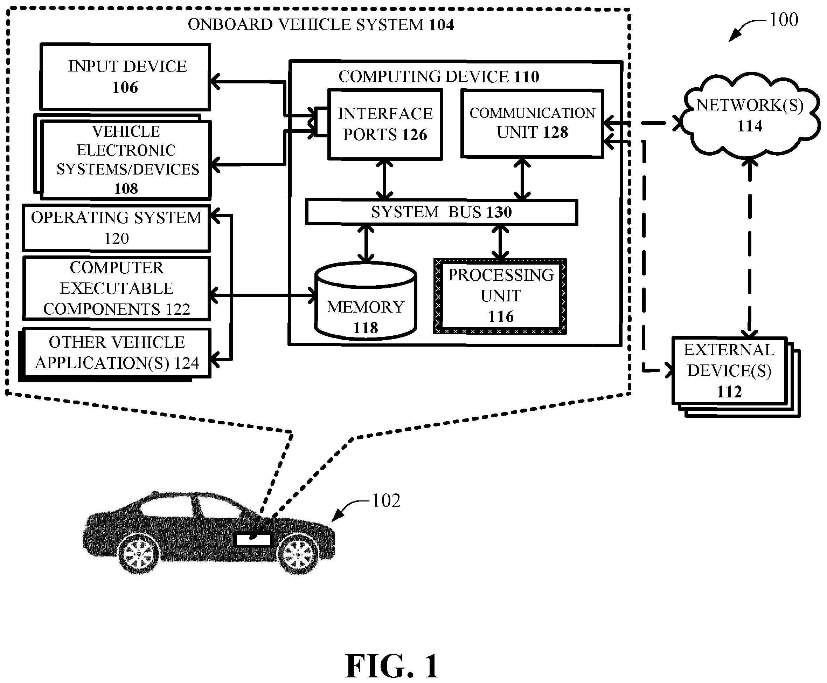

Turning now to FIG. 1, there is illustrated an example, non-limiting system 100 in accordance with one or more examples herein which is not a part of the invention. System 100 can comprise a computerized tool, which can be configured to perform various operations relating to estimating surface conditions on a road. In accordance with various exemplary embodiments, system 100 can be deployed on or within a vehicle 102, (e.g., an automobile, as shown in FIG. 1). Although FIG. 1 depicts the vehicle 102 as an automobile, the architecture of the system 100 is not so limited. For instance, the system 100 described herein can be implemented with a variety of types of vehicles 102. Example vehicles 102 that can incorporate the exemplary system 100 can include, but are not limited to: automobiles (e.g., autonomous vehicles or semi-autonomous vehicles), airplanes, trains, motorcycles, carts, trucks, semi-trucks, buses, boats, recreational vehicles, helicopters, jets, electric scooters, electric bicycles, a combination thereof, and/or the like. It is additionally noted that the system 100 can be implemented in a variety of types of automobiles, such as battery electric vehicles, hybrid vehicles, plug-in hybrid vehicles, internal combustion engine vehicles, or other suitable types of vehicles.

As shown in FIG. 1, the system 100 can comprise one or more onboard vehicle systems 104, which can comprise one or more input devices 106, one or more other vehicle electronic systems and/or devices 108, and/or one or more computing devices 110. Additionally, the system 100 can comprise one or more external devices 112 that can be communicatively and/or operatively coupled to the one or more computing devices 110 of the one or more onboard vehicle systems 104 either via one or more networks 114 and/or a direct electrical connection (e.g., as shown in FIG. 1). For example, the one or more networks 114 can include a machine learning network that can be used to learn the heatmaps of reflectance values obtained online for real-time implementation. In various examples, one or more of the onboard vehicle system 104, input devices 106, vehicle electronic systems and/or devices 108, computing devices 110, external devices 112, and/or networks 114 can be communicatively or operably coupled (e.g., over a bus or wireless network) to one another to perform one or more functions of the system 100.

The one or more input devices 106 can display one or more interactive graphic entity interfaces ("GUIs") that facilitate accessing and/or controlling various functions and/or application of the vehicle 102. The one or more input devices 106 can display one or more interactive GUIs that facilitate accessing and/or controlling various functions and/or applications. The one or more input devices 106 can comprise one or more computerized devices, which can include, but are not limited to: personal computers, desktop computers, laptop computers, cellular telephones (e.g., smartphones or mobile devices), computerized tablets (e.g., comprising a processor), smart watches, keyboards, touchscreens, mice, a combination thereof, and/or the like. An entity or user of the system 100 can utilize the one or more input devices 106 to input data into the system 100. Additionally, the one or more input devices 106 can comprise one or more displays that can present one or more outputs generated by the system 100 to an entity. For example, the one or more displays can include, but are not limited to: cathode tube display ("CRT"), light-emitting diode display ("LED"), electroluminescent display ("ELD"), plasma display panel ("PDP"), liquid crystal display ("LCD"), organic light-emitting diode display ("OLED"), a combination thereof, and/or the like.

For example, the one or more input devices 106 can comprise a touchscreen that can present one or more graphical touch controls that can respectively correspond to a control for a function of the vehicle 102, an application, a function of the application, interactive data, a hyperlink to data, and the like, wherein selection and/or interaction with the graphical touch control via touch activates the corresponding functionality. For instance, one or more GUIs displayed on the one or more input devices 106 can include selectable graphical elements, such as buttons or bars corresponding to a vehicle navigation application, a media application, a phone application, a back-up camera function, a car settings function, a parking assist function, and/or the like. In some examples, selection of a button or bar corresponding to an application or function can result in the generation of a new window or GUI comprising additional selectable icons or widgets associated with the selected application. For example, selection of one or more selectable options herein can result in generation of a new GUI or window that includes additional buttons or widgets with one or more selectable options. The type and appearance of the controls can vary. For example, the graphical touch controls can include icons, symbols, widgets, windows, tabs, text, images, a combination thereof, and/or the like.

The one or more input devices 106 can comprise suitable hardware that registers input events in response to touch (e.g., by a finger, stylus, gloved hand, pen, etc.). In some examples, the one or more input devices 106 can detect the position of an object (e.g., by a finger, stylus, gloved hand, pen, etc.) over the one or more input devices 106 within close proximity (e.g., a few centimeters) to touchscreen without the object touching the screen. As used herein, unless otherwise specified, reference to "on the touchscreen" refers to contact between an object (e.g., an entity's finger) and the one or more input devices 106 while reference to "over the touchscreen" refers to positioning of an object within close proximity to the touchscreen (e.g., a defined distance away from the touchscreen) yet not contacting the touchscreen.

The type of the input devices 106 can vary and can include, but is not limited to: a resistive touchscreen, a surface capacitive touchscreen, a projected capacitive touchscreen, a surface acoustic wave touchscreen, and an infrared touchscreen. In various examples, the one or more input devices 106 can be positioned on the dashboard of the vehicle 102, such as on or within the center stack or center console of the dashboard. However, the position of the one or more input devices 106 within the vehicle 102 can vary.

The one or more other vehicle electronic systems and/or devices 108 can include one or more additional devices and/or systems (e.g., in addition to the one or more input devices 106 and/or computing devices 110) of the vehicle 102 that can be controlled based at least in part on commands issued by the one or more computing devices 110 (e.g., via one or more processing units 116) and/or commands issued by the one or more external devices 112 communicatively coupled thereto. For example, the one or more other vehicle electronic systems and/or devices 108 can comprise: seat motors, seatbelt system(s), airbag system(s), display(s), infotainment system(s), speaker(s), a media system (e.g., audio and/or video), a back-up camera system, a heating, ventilation, and air conditioning ("HVAC") system, a lighting system, a cruise control system, a power locking system, a navigation system, an autonomous driving system, a vehicle sensor system, telecommunications system, a combination thereof, and/or the like. Other example other vehicle electronic systems and/or devices 108 can comprise one or more sensors, which can comprise distance sensors, seats, seat position sensor(s), collision sensor(s), odometers, altimeters, speedometers, accelerometers, engine features and/or components, fuel meters, flow meters, cameras (e.g., digital cameras, heat cameras, infrared cameras, and/or the like), lasers, radar systems, lidar systems, microphones, vibration meters, moisture sensors, thermometers, seatbelt sensors, wheel speed sensors, a combination thereof, and/or the like. For instance, a speedometer of the vehicle 102 can detect the vehicle's 102 traveling speed. Further, the one or more sensors can detect and/or measure one or more conditions outside the vehicle 102, such as: whether the vehicle 102 is traveling through a rainy environment, whether the vehicle 102 is traveling through winter conditions (e.g., snowy and/or icy conditions), whether the vehicle 102 is traveling through very hot conditions (e.g., desert conditions), and/or the like. Example navigational information can include, but is not limited to: the destination of the vehicle 102, the position of the vehicle 102, the type of vehicle 102, the speed of the vehicle 102, environmental conditions surrounding the vehicle 102, the planned route of the vehicle 102, traffic conditions expected to be encountered by the vehicle 102, operational status of the vehicle 102, a combination thereof, and/or the like.

The one or more computing devices 110 can facilitate executing and controlling one or more operations of the vehicle 102, including one or more operations of the one or more input devices 106, and the one or more other vehicle electronic systems/devices 108 using machine-executable instructions. In this regard, examples of system 100 and other systems described herein can include one or more machine-executable components embodied within one or more machines (e.g., embodied in one or more computer readable storage media associated with one or more machines, such as computing device 110). Such components, when executed by the one or more machines (e.g., processors, computers, virtual machines, etc.) can cause the one or more machines to perform the operations described.

For example, the one or more computing devices 110 can include or be operatively coupled to at least one memory 118 and/or at least one processing unit 116. The one or more processing units 116 can be any of various available processors. For example, dual microprocessors and other multiprocessor architectures also can be employed as the processing unit 116. In various examples, the at least one memory 118 can store software instructions embodied as functions and/or applications that when executed by the at least one processing unit 116, facilitate performance of operations defined by the software instruction. In the example shown, these software instructions can include one or more operating system 120, one or more computer executable components 122, and/or one or more other vehicle applications 124. For example, the one or more operating systems 120 can act to control and/or allocate resources of the one or more computing devices 110. It is to be appreciated that the claimed subject matter can be implemented with various operating systems or combinations of operating systems.

The one or more computer executable components 122 and/or the one or more other vehicle applications 124 can take advantage of the management of resources by the one or more operating systems 120 through program modules and program data also stored in the one or more memories 118. The one or more computer executable components 122 can provide various features and/or functionalities that can facilitate estimating surface conditions on a road herein. For example, other vehicle applications 124 can include, but are not limited to: a navigation application, a media player application, a phone application, a vehicle settings application, a parking assistance application, an emergency roadside assistance application, a combination thereof, and/or the like. The features and functionalities of the one or more computer executable components 122 are discussed in greater detail infra.

The one or more computing devices 110 can further include one or more interface ports 126, one or more communication units 128, and a system bus 130 that can communicatively couple the various features of the one or more computing devices 110 (e.g., the one or more interface ports 126, the one or more communication units 128, the one or more memories 118, and/or the one or more processing units 116). The one or more interface ports 126 can connect the one or more input devices 106 (and other potential devices) and the one or more other vehicle electronic systems/devices 108 to the one or more computing devices 110. For example, the one or more interface ports 126 can include, a serial port, a parallel port, a game port, a universal serial bus ("USB") and the like.

The one or more communication units 128 can include suitable hardware and/or software that can facilitate connecting one or more external devices 112 to the one or more computing devices 110 (e.g., via a wireless connection and/or a wired connection). For example, the one or more communication units 128 can be operatively coupled to the one or more external devices 112 via one or more networks 114. The one or more networks 114 can include wired and/or wireless networks, including but not limited to, a personal area network ("PAN"), a local area network ("LAN"), a cellular network, a wide area network ("WAN", e.g., the Internet), and the like. For example, the one or more external devices 112 can communicate with the one or more computing devices 110 (and vice versa) using virtually any desired wired or wireless technology, including but not limited to: wireless fidelity ("Wi-Fi"), global system for mobile communications ("GSM"), universal mobile telecommunications system ("UMTS"), worldwide interoperability for microwave access ("WiMAX"), enhanced general packet radio service (enhanced "GPRS"), fifth generation ("5G") communication system, sixth generation ("6G") communication system, third generation partnership project ("3GPP") long term evolution ("LTE"), third generation partnership project 2 ("3 GPP2") ultra- mobile broadband ("UMB"), high speed packet access ("HSPA"), Zigbee and other 802.XX wireless technologies and/or legacy telecommunication technologies, near field communication ("NFC") technology, BLUETOOTH^{®}, Session Initiation Protocol ("SIP"), ZIGBEE^{®}, RF4CE protocol, WirelessHART protocol, 6LoWPAN (IPv6 over Low power Wireless Area Networks), Z-Wave, an ANT, an ultra-wideband ("UWB") standard protocol, and/or other proprietary and non-proprietary communication protocols. In this regard, the one or more communication units 128 can include software, hardware, or a combination of software and hardware that is configured to facilitate wired and/or wireless communication between the one or more computing devices 110 and the one or more external devices 112. While the one or more communication units 128 are shown for illustrative clarity as a separate unit that is not stored within memory 118, it is to be appreciated that one or more (software) components of the communication unit can be stored in memory 118 and include computer executable components.

The one or more external devices 112 can include any suitable computing device comprising a display and input device (e.g., a touchscreen) that can communicate with the one or more computing devices 110 comprised within the onboard vehicle system 104 and interface with the one or more computer executable components 122 (e.g., using a suitable application program interface ("API")). For example, the one or more external devices 112 can include, but are not limited to: a mobile phone, a smartphone, a tablet, a personal computer ("PC"), a digital assistant ("PDA"), a heads-up display ("HUD"), virtual reality ("VR") headset, an augmented reality ("AR") headset, or another type of wearable computing device, a desktop computer, a laptop computer, a computer tablet, a combination thereof, and the like.

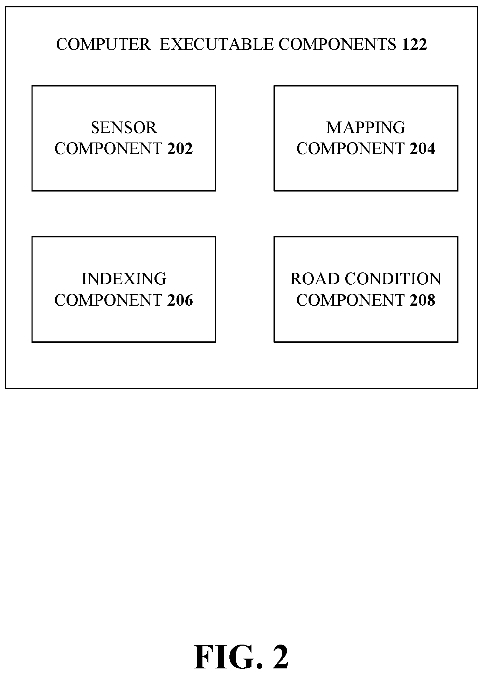

FIG. 2 illustrates a block diagram of example, non-limiting computer executable components 122 that can facilitate estimating surface conditions on a road in accordance with one or more examples described herein. Repetitive description of like elements employed in other examples described herein is omitted for sake of brevity. As shown in FIG. 2, the one or more computer executable components 122 can comprise sensor component 202, mapping component 204, indexing component 206, road component 208. The sensor component 202 can comprise a LiDAR sensor (e.g., or connected with a LiDAR sensor). Further, the sensor component 202 can obtain a reflectance value and a distance associated with a portion of a road. For example and without limitation, the sensor component 202 can be configured to determine the reflectance value of a portion of the road. Additionally, the sensor component 202 can be configured to determine a distance between the vehicle 102 and the road with respect to the identified portion (e.g., with the associated reflectance value).

With examples, in order to obtain the reflectance value and the distance associated with the portion of the road, the sensor component 202 can be configured to transmit/send/emit one or more pulsed light waves in a variety of directions. The one or more pulsed light waves can be generally directed at the road (e.g., at a portion of the road that the vehicle 102 is heading towards) to estimate the quality of the surface condition on the road. Determining the surface condition of the road (e.g., or over portions of the road) can evaluate the degree of safety of traveling on the road with the vehicle 102. For example and without limitation, in environments with snowy and rainy conditions, it can be important to determine if the surface condition of the road is safe for travel (e.g., or at what speeds safe travel can be accomplished).

Further, in examples, the sensor component 202 can emit one or more pulsed light waves that can reflect of a surface of the road producing one or more returns to be received by the sensor component 202 in determining the distance between the surface and the vehicle 102. The sensor component 202 can emit light waves that can reflect off objects and/or surfaces and can return to the sensor component 202. For example and without limitation, the sensor component 202 can determine the distance a portion of the road is away from the vehicle 102 by emitting one or more pulsed light waves and receiving one or more returns with a variety of indexes (e.g., as assigned by the LiDAR). The sensor component 202 can additionally determine the reflectance value of the portion of the road. Further, the sensor component 202 can obtain a reflectance value by measuring the amount of light reflected from the surface of the road. In further examples, the non-limiting surface condition estimation system 100 can utilize the reflectance value and the distance to generate a heat map.

With examples, the non-limiting surface condition estimation system 100 can comprise a mapping component 204 that can generate a heat map 210 of the reflectance value and the distance for one or more portion of the road as sensed by the sensor component 202 (e.g., LiDAR). The mapping component 204 can be configured to generate a plot/graph comparing the reflectance value with the associated distance for a portion of the road. The mapping component 204 can generate the heat map 210 to be analyzed by the road condition component 208 in estimating a surface condition of the road. With examples, the non-limiting surface condition estimation system 100, or the road condition component 208, can compare the reflectance value with one or more pre-defined distributions of reflectance values representing one or more surface conditions. Additionally, the road condition component 208 can compare the heat map with one or more predefined heat maps representing one or more surface conditions to determine the surface condition.

In examples, the road condition component 208 can determine that the portion of the road can be dry, moist, slushy, or wet in response to receiving one or more returns with indexes of two, three, or four from the one or more pulsed light waves transmitted by the sensor component 202. Further, the road condition component 208 can determine that the portion of the road can be snowy or icy in response to receiving one or more returns with an index of five from the one or more pulsed light waves. The non-limiting surface condition estimation system 100 can further comprise an indexing component 206 that can determine a number of returns received by the sensor component 202 indicating a surface condition of the road. Additionally, the indexing component 206 can assign indexes to the one or more returns received. With examples, the indexing component 206 (e.g., or the LiDAR sensor) can assign an index of two to the first return received. Similarly, for the second return received, the indexing component 206 can assign an index of three to the second return received. The indexing component 206 can assign an index of four to the third return received and can assign an index of five to the fourth return received. For example and without limitation, the greater the number of returns received by the sensor component 202, the more reflective the surface condition can be. The road condition component 208 can determine the surface condition of the road from the heat map 210 and the number of returns received.

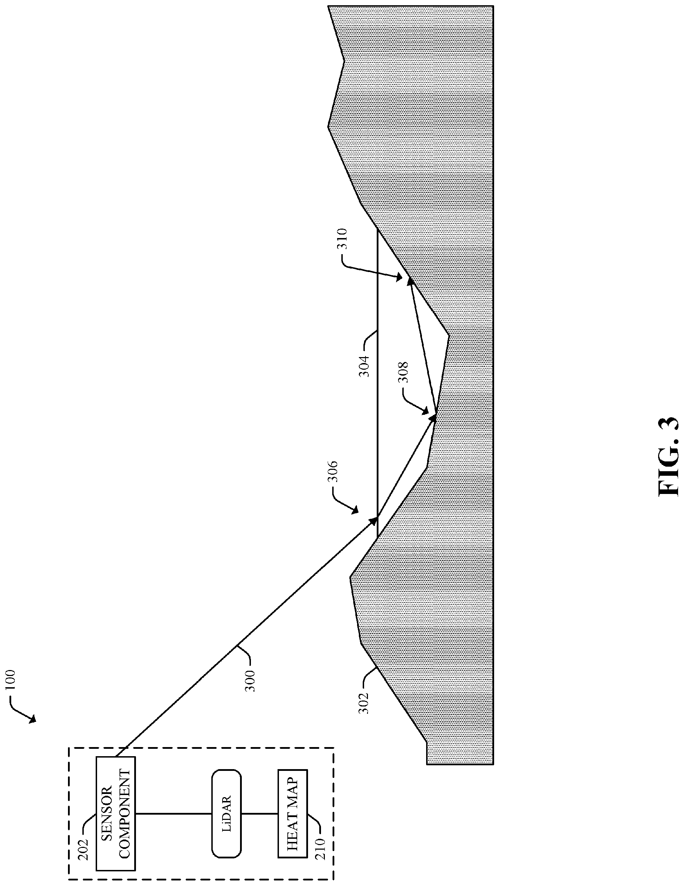

With examples, such as generally illustrated in FIG. 3, the sensor component 202 can emit one or more pulsed light waves 300 onto a surface of the road 302. In various examples, the road 302 can include a variety of surface conditions including, but not limited to, dry, moist, slushy, wet, snow, or icy. The sensor component 202 can be configured to emit the one or more pulsed light waves to a variety of portions of the road in generating a mapping of the road (e.g., of the reflectance values). Such as can be seen from FIG. 3, the sensor component 202 can emit a pulsed light wave 300 to an icy portion 304 of the road. The sensor component 202 can receive a return (e.g., a return signal that has reflected from a surface) reflected from the icy portion 304 at a first return 306, a second return 308, and a third return 310. In examples, the returns 306, 308, 310 can be reflective portions of the surface of the road. For example and without limitation, for a greater number of returns received by the sensor component 202, the more reflective the surface of the road (e.g., the more potentially dangerous a portion of a road can be to traverse without changing speed or course). Further, in examples, the returning pulse (e.g., of the one or more returns) with the highest reflectance value can be assigned a first index (e.g., an index of two); the returning pulse with the next highest reflectance can be assigned a second index (e.g., an index of three); and the returning pulse with the lowest reflectance value can be assigned a third index (e.g., an index of four).

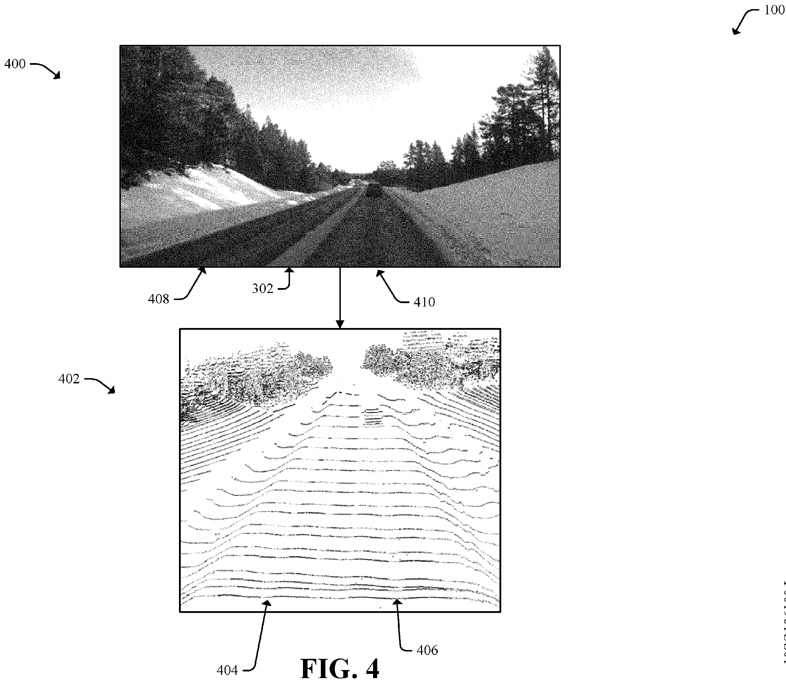

In examples, such as generally illustrated in FIG. 4, the vehicle 102 can be traveling on the road 302, and a camera of the vehicle 102 can capture image 400 of the road. Further, the non-limiting surface condition estimation system 100 can generate a reflectance plot 402 for the road as supplied by the sensor component 202 (e.g., the LiDAR). The sensor component 202 can emit one or more pulsed light waves to various portions of the road (e.g., as shown by the points generated in the reflectance plot 402). The reflectance plot 402 can include colors that can indicate the degree of reflectiveness for each point on the reflectance plot 402. Portions of the road that include dryer (higher-friction) surface conditions can be represented by the colors red and yellow; additionally, portions of the road that include wet/snowy (lower-friction) surface conditions can be represented by the colors blue and green.

With examples, as can be generally seen from FIG. 4, a first dry portion 404 and a second dry portion 406 on the reflectance plot 402 can correspond with a first road portion 408 and a second road portion 410 in the capture image of the road. The first dry portion 404 and the second dry portion 406 can be paths in the road that vehicle wheels travel on (e.g., thus including less snow or ice than portions of the road that vehicle wheels do not routinely contact). The sensor component 202 can actively receive reflectance values and distances for the road as the vehicle 102 traverses along the path generating the reflectance plot 402. Further, the reflectance values obtained via the sensor component 202 can range between 0 and 0.2 (e.g., or a different range according to the LiDAR manufacturer. Reflectance values near 0.0 can be considered to be high-friction surfaces (e.g., dry surfaces), and reflectance values near 2.0 can be considered to be low-friction surfaces (e.g., wet surfaces).

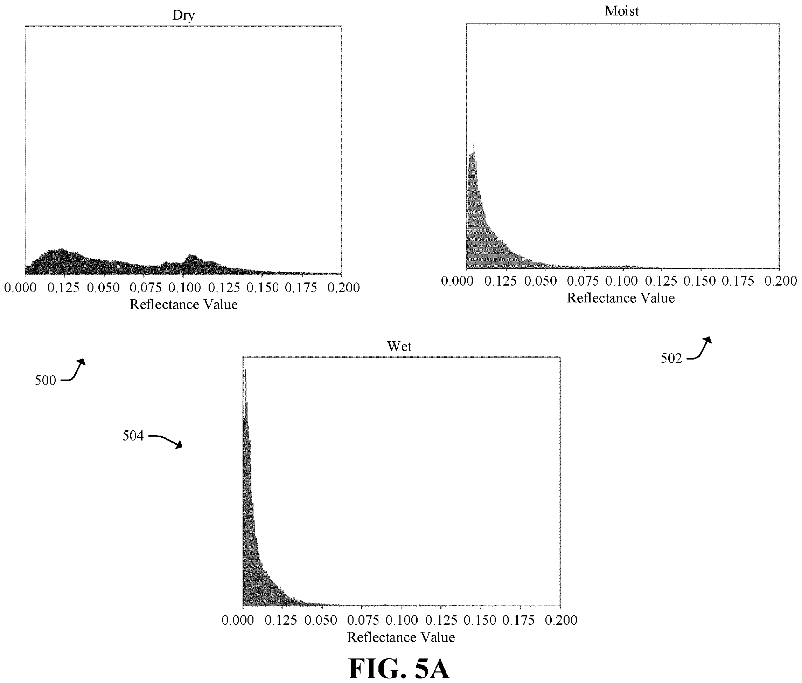

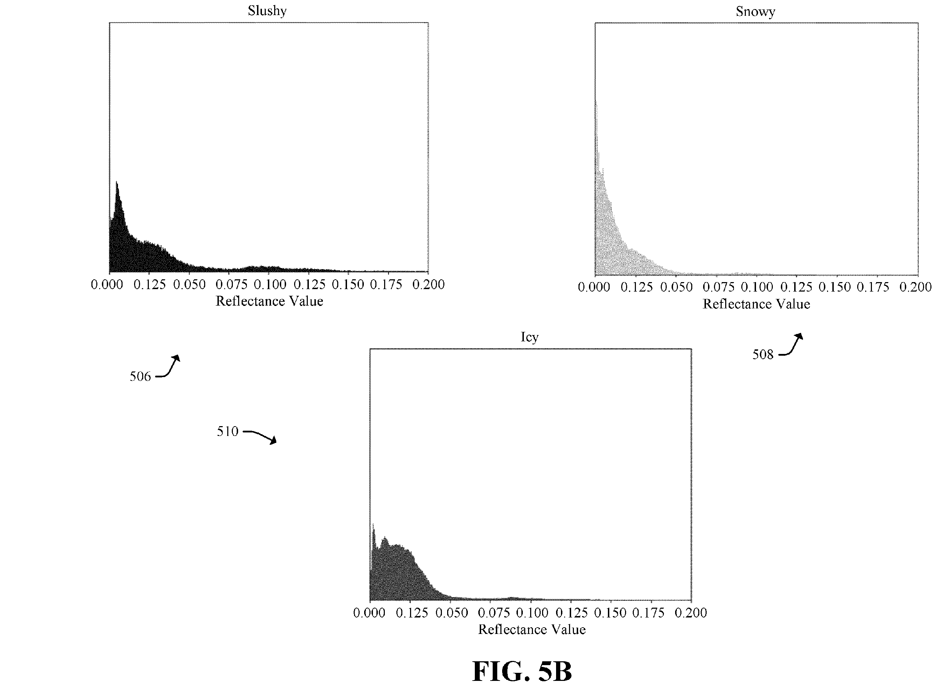

In examples, such as generally illustrated in FIGS. 5A and 5B, the non-limiting surface condition estimation system 100 can compare the reflectance values for each portion of the road with one or more pre-defined distributions of reflectance to determine the surface condition. For example and without limitation, the first surface condition can be a dry surface condition and can include first distribution plot 500 representing expected reflectance values for a dry surface. The dry surface condition can differ from the remaining surface conditions because the reflectance values for dry surface conditions can be generally evenly distributed (e.g., at least in comparison to the other pre-defined distributions of reflectance surface conditions). As can be seen from first distribution plot 500, under dry surface conditions, the reflectance values can include a considerable number of values above 0.075. Further, for distances greater than about 10 meters, the reflectance values can be spread out between about 0 and about 0.125 for dry surface conditions.

With examples, such as generally illustrated in FIGS. 5A and 5B, a second surface condition can be a moist surface and can include a second distribution plot 502 representing expected reflectance values for a moist surface. Additionally, a third surface condition can be a wet surface and can include a third distribution plot 504 representing expected reflectance values for wet surface. A fourth surface condition can be a slushy surface and can include a fourth distribution plot 506 representing expected reflectance values for a slushy surface. Further, a fifth surface condition can be a snowy surface and can include a fifth distribution plot 508 representing expected reflectance values for a snowy surface. A sixth surface condition can be an icy surface and can include a sixth distribution plot 510 representing expected reflectance values for an icy surface.

In examples, for reflectance values between 0 and about 0.025 at distances above about 10 meters, the road condition component 208 can determine the surface condition to be either a moist surface, a wet surface, or a snow surface as seen in the second distribution plot 502, the third distribution plot 504, or the fifth distribution plot 508. When comparing icy surfaces to the moist surface, the wet surface, and the snow surface, icy surfaces can include higher reflectance values at distances greater than 10 meters but can include reflectance values generally lower than that of a dry surface. Additionally, the distribution for a slushy surface (e.g., the fourth distribution plot 506) can be substantially similar to the distribution for an icy surface (e.g., the sixth distribution plot 510); however, the slushy surface can include generally lower reflectance values than that of an icy surface.

Further, the non-limiting surface condition estimation system 100 can compare (via the road condition component 208) the reflectance values for each portion of the road with the first distribution plot 500, the second distribution plot 502, the third distribution plot 504, the fourth distribution plot 506, the fifth distribution plot 508, and the sixth distribution plot 510 to determine one or more surface conditions for the road.

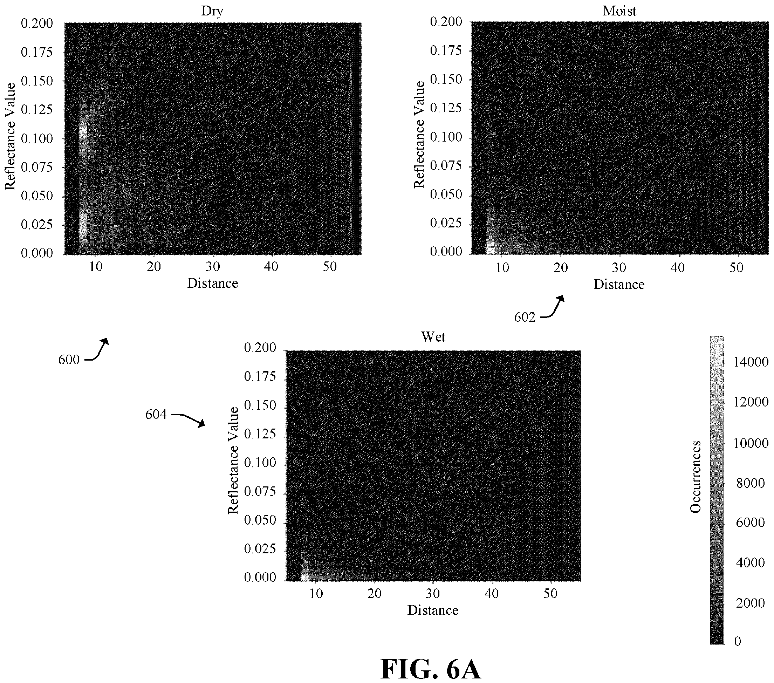

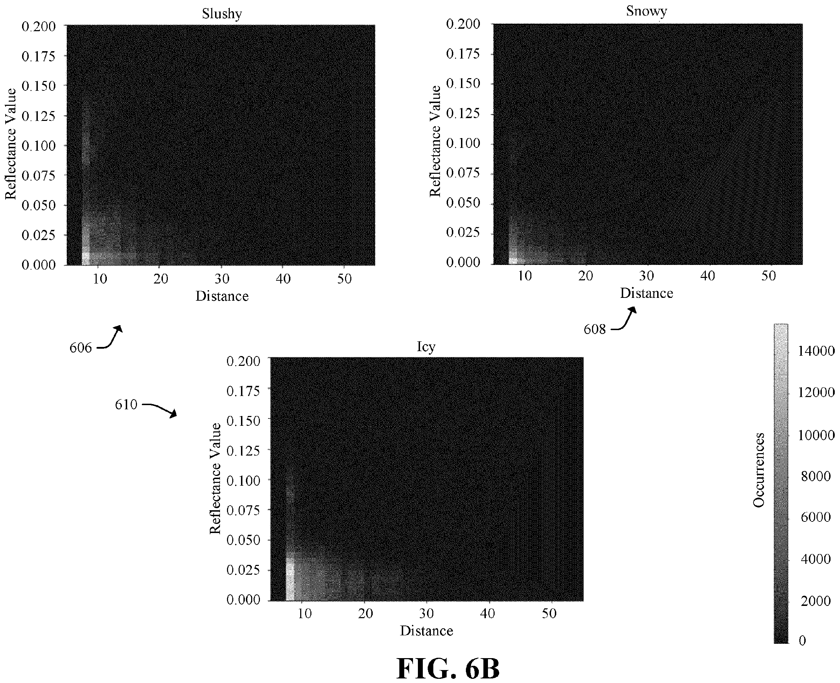

With examples, such as generally illustrated in FIGS. 6A and 6B, the non-limiting surface condition estimation system 100 (e.g., the mapping component 204) can generate one or more pre-defined heat maps representing one or more surface conditions to determine the surface condition for a portion of the road. For example and without limitation, the mapping component 204 can generate: a first pre-determined heat map 600 representative of dry surface conditions; a second pre-determined heat map 602 representative of moist surface conditions; a third pre-determined heat map 604 representative of wet surface conditions; a fourth pre-determined heat map 606 representative of slushy surface conditions; a fifth pre-determined heat map 608 representative of snowy surface conditions; and a sixth pre-determined heat map 610 representative of icy surface conditions.

In examples, the one or more heat maps can be plots of reflectance values with respect to distance and the number of occurrences. The road condition component 208 can determine the surface condition for a portion of the road by comparing the generated heat map with the one or more pre-defined heat maps 600-610.

With examples, the road condition component 208 can further consider the number of returns received from the sensor component 202, via the indexing component 206. The number of returns received can be relevant to determine the surface condition of the road. Turning back to FIG. 3, the indexing component 206 can receive any number of returns in response to the sensor component 202 emitting one or more pulsed light waves that reflect off a surface of the road. Such as illustrated, the indexing component 206 can assign an index of two to the first return 306, an index of three to the second return 308, and an index of four to the third return 310. In examples, the more reflective the surface condition on the road, the greater the number of return received by the sensor component 202 or the indexing component 206.

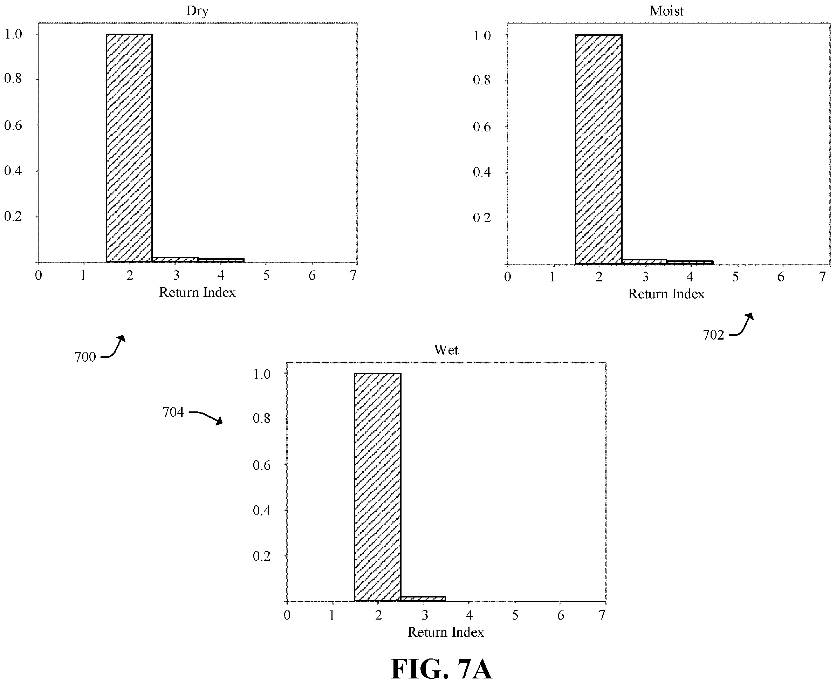

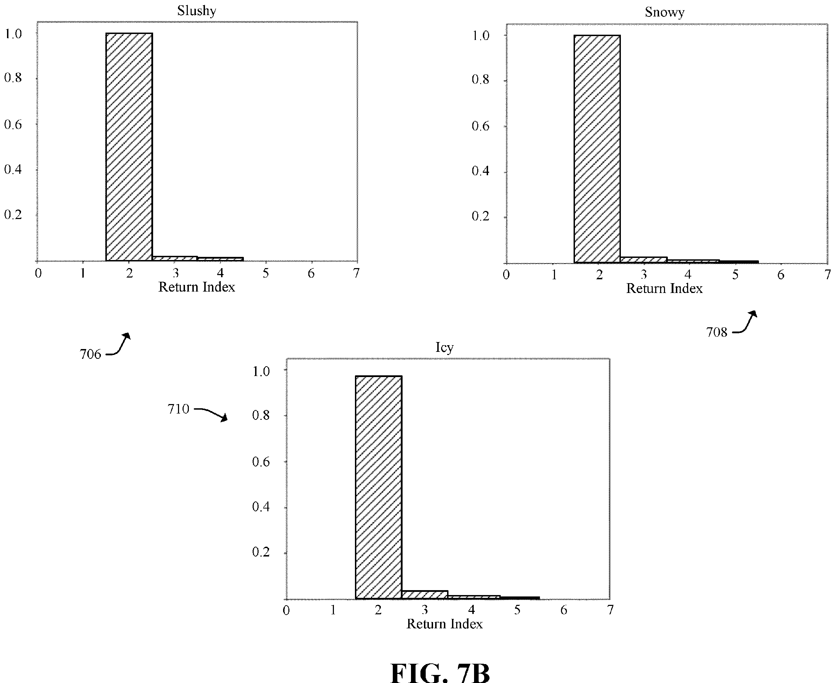

In examples, such as generally illustrated in FIGS. 7A and 7B, the non-limiting surface condition estimation system 100 can compare the number of return received with one or more surface condition return index plots. For example and without limitation, the indexing component 206 and/or the road condition component 208 can compare the number of return indexes received with a first return index plot 700 (indicating a dry surface condition), a second return index plot 702 (indicating a moist surface condition), a third return index plot 704 (indicating a wet surface condition), a fourth return index plot 706 (indicating a slushy surface condition), a fifth return index plot 708 (indicating a snowy surface condition), and a sixth return index plot 710 (indicating an icy surface condition).

With examples, the road condition component 208 can compare the number of returns received with the one or more return index plots 700, 702, 704, 706, 708, 710. Further, in response to the indexing component 206 determining that there are five returns for a portion of a road, the road condition component 208 can determine that the surface condition is either snowy or icy (e.g., return index plots 708 and 710). In response to determining that the portion of the road is either snowy or icy, the road condition component 208 can compare the generated heat map 210 of the portion with the fifth pre-defined heat map 608 and the sixth pre-defined heat map 610 to determine the surface condition (e.g., between snowy or icy).

In examples, additionally or alternatively, in response to the indexing component 206 assigning an index of three to one or more returns associated with a portion of a road, the road condition component 208 can determine that the portion of the road includes a wet surface. The road condition component 208 can further compare the generated heat map 210 with the third predefined heat map 604 to determine/confirm the surface condition (e.g., a wet surface condition). Further, in response to the indexing component 206 assigning an index of four to one or more returns associated with a portion of a road, the road condition component 208 can determine that the portion of the road includes a dry surface, a moist surface, or a slushy surface. The road condition component 208 can further compare the generated heat map 210 with the first predefined heat map 600, the second pre-defined heat map 602, and the fourth pre-defined heat map 606. In this manner, the non-limiting surface condition estimation system 100 can determine the surface condition for a portion of the road.

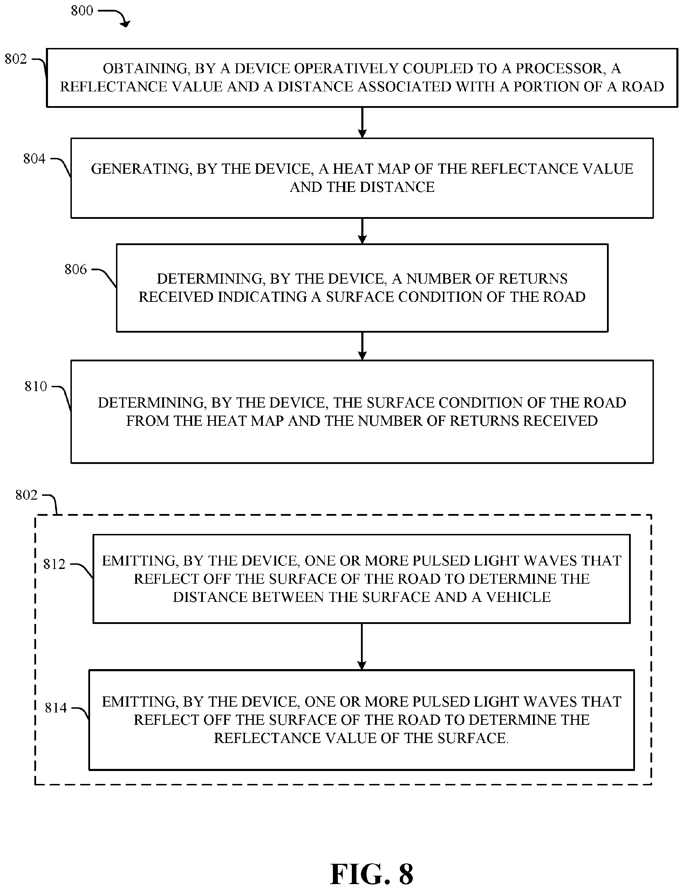

FIG. 8 illustrates a flow diagram 800 for a computer-implemented methodology for estimating surface conditions on a road, in accordance with at least one example.

At 802, the computer-implemented method 800 can comprise obtaining, by a device operatively coupled to a processor, a reflectance value and a distance associated with a portion of a road.

At 804, the computer-implemented method 800 can comprise generating, by the device, a heat map of the reflectance value and the distance.

Additionally, at 806, the computer-implemented method 800 can comprise determining, by the device, a number of returns received indicating a surface condition of the road.

At 808, the computer-implemented method 800 can comprise determining, by the device, the surface condition of the road from the heat map and the number of returns received.

With examples, the computer-implemented method 800 can comprise step 802 which can further include steps 812 and 814. Further, at 812, the computer-implemented method 800 can comprise emitting, by the device, one or more pulsed light waves that reflect off the surface of the road to determine the distance between the surface and a vehicle 102. Additionally, at 814, the computer-implemented method 800 can comprise emitting, by the device, one or more pulsed light waves that reflect off the surface of the road to determine the reflectance value of the surface.

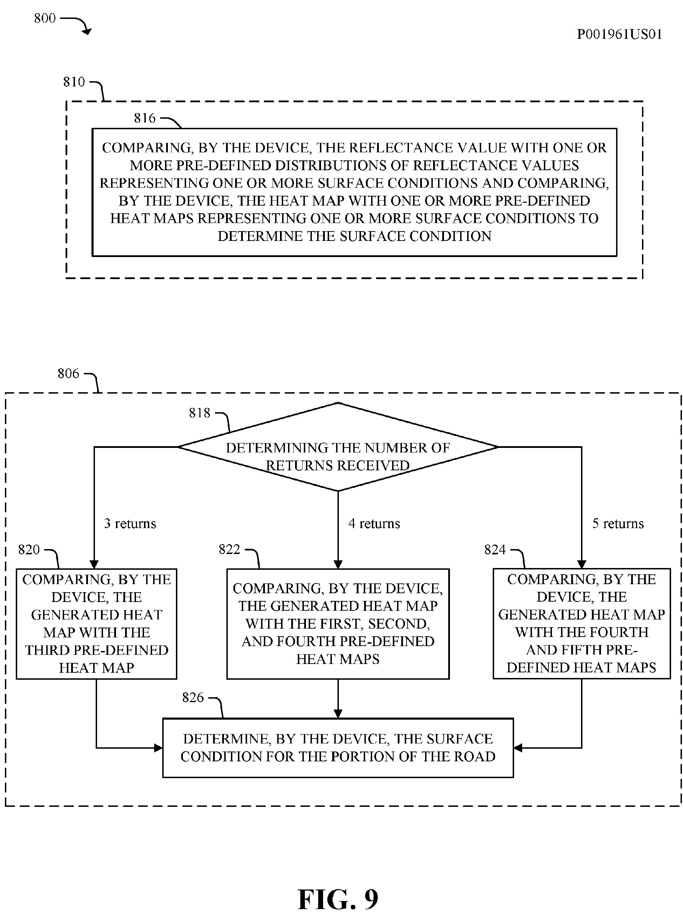

In examples, such as generally illustrated in FIG. 9, the computer-implemented method 800 can comprise step 810 which can further include step 816. Further, at 816, the computer-implemented method 800 can comprise comparing, by the device, the reflectance value with one or more pre-defined distributions of reflectance values representing one or more surface conditions and comparing, by the device, the heat map with one or more pre-defined heat maps representing one or more surface conditions to determine the surface condition.

With examples, the computer-implemented method 800 can comprise step 806 which can further include steps 818, 820, and 822. Further, at 818, the computer-implemented method 800 can comprise determining the number of returns received. The computer-implemented method 800 can, in response to detecting three returns received, comprise comparing, by the device, the generated heat map with the third pre-defined heat map. Further, in response to detecting four returns received, the computer-implemented method 800 can comprise comparing, by the device, the generated heat map with the first pre-defined heat map, the second pre-defined heat map, and the fourth pre-defined heat map. In response to detecting five returns received, the computer-implemented method 800 can comprise comparing, by the device, the generated heat map with the sixth pre-defined heat map and the fifth pre-defined heat map. Further, at 826, the computer-implemented method 800 can include determining, by the device, the surface condition for the portion of the road.

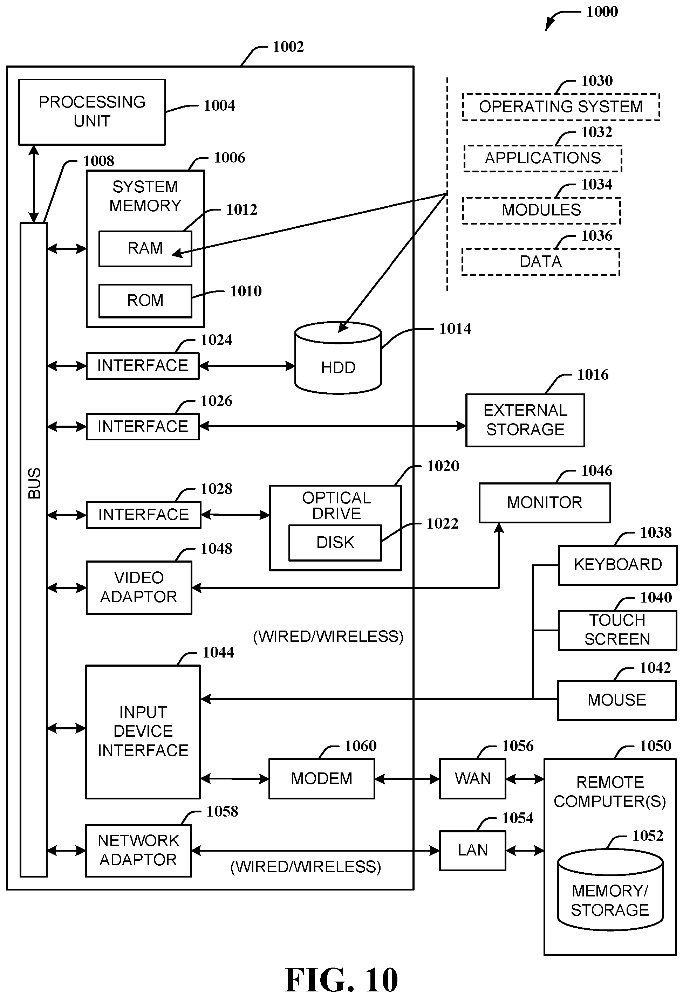

Turning next to FIG. 10, a detailed description is provided of additional context for the one or more examples described herein, which are not a part of the present invention, with FIGS. 1-9.

Systems described herein can be coupled (e.g., communicatively, electrically, operatively, optically, inductively, acoustically, etc.) to one or more local or remote (e.g., external) systems, sources, and/or devices (e.g., electronic control systems (ECU), classical and/or quantum computing devices, communication devices, etc.). For example, system 100 (or other systems, controllers, processors, etc.) can be coupled (e.g., communicatively, electrically, operatively, optically, etc.) to one or more local or remote (e.g., external) systems, sources, and/or devices using a data cable (e.g., High-Definition Multimedia Interface (HDMI), recommended standard (RS), Ethernet cable, etc.) and/or one or more wired networks described below.

In some examples, systems herein can be coupled (e.g., communicatively, electrically, operatively, optically, inductively, acoustically, etc.) to one or more local or remote (e.g., external) systems, sources, and/or devices (e.g., electronic control units (ECU), classical and/or quantum computing devices, communication devices, etc.) via a network. In these examples, such a network can comprise one or more wired and/or wireless networks, including, but not limited to, a cellular network, a wide area network (WAN) (e.g., the Internet), and/or a local area network (LAN). For example, system 100 can communicate with one or more local or remote (e.g., external) systems, sources, and/or devices, for instance, computing devices using such a network, which can comprise virtually any desired wired or wireless technology, including but not limited to: powerline ethernet, VHF, UHF, AM, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, L-band voice or data information, 6LoWPAN (IPv6 over Low power Wireless Area Networks), Z-Wave, an ANT, an ultra-wideband (UWB) standard protocol, and/or other proprietary and non-proprietary communication protocols. In this example, system 100 can thus include hardware (e.g., a central processing unit (CPU), a transceiver, a decoder, an antenna (e.g., a ultra-wideband (UWB) antenna, a BLUETOOTH^{®} low energy (BLE) antenna, etc.), quantum hardware, a quantum processor, etc.), software (e.g., a set of threads, a set of processes, software in execution, quantum pulse schedule, quantum circuit, quantum gates, etc.), or a combination of hardware and software that facilitates communicating information between a system herein and remote (e.g., external) systems, sources, and/or devices (e.g., computing and/or communication devices such as, for instance, a smart phone, a smart watch, wireless earbuds, etc.).

Systems herein can comprise one or more computer and/or machine readable, writable, and/or executable components and/or instructions that, when executed by processor (e.g., a processing unit 116 which can comprise a classical processor, a quantum processor, etc.), can facilitate performance of operations defined by such component(s) and/or instruction(s). Further, in numerous examples, any component associated with a system herein, as described herein with or without reference to the various figures of the subject disclosure, can comprise one or more computer and/or machine readable, writable, and/or executable components and/or instructions that, when executed by a processor, can facilitate performance of operations defined by such component(s) and/or instruction(s). Consequently, according to numerous examples, system herein and/or any components associated therewith as disclosed herein, can employ a processor (e.g., processing unit 116) to execute such computer and/or machine readable, writable, and/or executable component(s) and/or instruction(s) to facilitate performance of one or more operations described herein with reference to system herein and/or any such components associated therewith.

Systems herein can comprise any type of system, device, machine, apparatus, component, and/or instrument that comprises a processor and/or that can communicate with one or more local or remote electronic systems and/or one or more local or remote devices via a wired and/or wireless network. All such examples are envisioned. For example, a system (e.g., a system 100 or any other system or device described herein) can comprise a computing device, a general-purpose computer, field-programmable gate array, AI accelerator application-specific integrated circuit, a special-purpose computer, an onboard computing device, a communication device, an onboard communication device, a server device, a quantum computing device (e.g., a quantum computer), a tablet computing device, a handheld device, a server class computing machine and/or database, a laptop computer, a notebook computer, a desktop computer, wearable device, internet of things device, a cell phone, a smart phone, a consumer appliance and/or instrumentation, an industrial and/or commercial device, a digital assistant, a multimedia Internet enabled phone, a multimedia players, and/or another type of device.

In order to provide additional context for various examples described herein, FIG. 10 and the following discussion are intended to provide a brief, general description of a suitable computing environment 1000, which is not a part of the invention, and in which the various examples of the example described herein can be implemented. While the examples have been described above in the general context of computer-executable instructions that can run on one or more computers, those skilled in the art will recognize that the examples can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the various methods can be practiced with other computer system configurations, including single-processor or multiprocessor computer systems, minicomputers, mainframe computers, Internet of Things (IoT) devices, distributed computing systems, as well as personal computers (e.g., ruggedized personal computers), field-programmable gate arrays, hand-held computing devices, microprocessor-based or programmable consumer electronics, and the like, each of which can be operatively coupled to one or more associated devices.

The illustrated examples of the examples herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, optic, infrared, and other wireless media.

With reference again to FIG. 10, the example environment 1000 for implementing various examples of the aspects described herein, which is not a part of the invention, includes a computer 1002, the computer 1002 including a processing unit 1004, a system memory 1006 and a system bus 1008. The system bus 1008 couples system components including, but not limited to, the system memory 1006 to the processing unit 1004. The processing unit 1004 can be any of various commercially available processors, field-programmable gate array, AI accelerator application-specific integrated circuit, or other suitable processors. Dual microprocessors and other multi-processor architectures can also be employed as the processing unit 1004.

The system bus 1008 can be any of several types of bus structure that can further interconnect to a memory bus (with or without a memory controller), a peripheral bus, and a local bus using any of a variety of commercially available bus architectures. The system memory 1006 includes ROM 1010 and RAM 1012. A basic input/output system (BIOS) can be stored in a nonvolatile memory such as ROM, erasable programmable read only memory (EPROM), EEPROM, which BIOS contains the basic routines that help to transfer information between elements within the computer 1002, such as during startup. The RAM 1012 can also include a high-speed RAM such as static RAM for caching data. It is noted that unified Extensible Firmware Interface(s) can be utilized herein.

The computer 1002 further includes an internal hard disk drive (HDD) 1014 (e.g., EIDE, SATA), one or more external storage devices 1016 (e.g., a magnetic floppy disk drive (FDD) 1016, a memory stick or flash drive reader, a memory card reader, etc.) and an optical disk drive 1020 (e.g., which can read or write from a CD-ROM disc, a DVD, a BD, etc.). While the internal HDD 1014 is illustrated as located within the computer 1002, the internal HDD 1014 can also be configured for external use in a suitable chassis (not shown). Additionally, while not shown in environment 1000, a solid-state drive (SSD) could be used in addition to, or in place of, an HDD 1014. The HDD 1014, external storage device(s) 1016 and optical disk drive 1020 can be connected to the system bus 1008 by an HDD interface 1024, an external storage interface 1026 and an optical drive interface 1028, respectively. The interface 1024 for external drive implementations can include at least one or both of Universal Serial Bus (USB) and Institute of Electrical and Electronics Engineers (IEEE) 1394 interface technologies. Other external drive connection technologies are within contemplation of the examples described herein.

The drives and their associated computer-readable storage media provide nonvolatile storage of data, data structures, computer-executable instructions, and so forth. For the computer 1002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1012, including an operating system 1030, one or more application programs 1032, other program modules 1034 and program data 1036. All or portions of the operating system, applications, modules, and/or data can also be cached in the RAM 1012. The systems and methods described herein can be implemented utilizing various commercially available operating systems or combinations of operating systems.

Computer 1002 can optionally comprise emulation technologies. For example, a hypervisor (not shown) or other intermediary can emulate a hardware environment for operating system 1030, and the emulated hardware can optionally be different from the hardware illustrated in FIG. 10. In such an example, operating system 1030 can comprise one virtual machine (VM) of multiple VMs hosted at computer 1002. Furthermore, operating system 1030 can provide runtime environments, such as the Java runtime environment or the .NET framework, for applications 1032. Runtime environments are consistent execution environments that allow applications 1032 to run on any operating system that includes the runtime environment. Similarly, operating system 1030 can support containers, and applications 1032 can be in the form of containers, which are lightweight, standalone, executable packages of software that include, e.g., code, runtime, system tools, system libraries and settings for an application.

Further, computer 1002 can be enabled with a security module, such as a trusted processing module (TPM). For instance, with a TPM, boot components hash next in time boot components, and wait for a match of results to secured values, before loading a next boot component. This process can take place at any layer in the code execution stack of computer 1002, e.g., applied at the application execution level or at the operating system (OS) kernel level, thereby enabling security at any level of code execution.

A user can enter commands and information into the computer 1002 through one or more wired/wireless input devices, e.g., a keyboard 1038, a touch screen 1040, and a pointing device, such as a mouse 1042. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1004 through an input device interface 1044 that can be coupled to the system bus 1008, but can be connected by other interfaces, such as a parallel port, an IEEE 1394 serial port, a game port, a USB port, an IR interface, a BLUETOOTH^{®} interface, etc.

A monitor 1046 or other type of display device can be also connected to the system bus 1008 via an interface, such as a video adapter 1048. In addition to the monitor 1046, a computer typically includes other peripheral output devices (not shown), such as speakers, printers, etc.

The computer 1002 can operate in a networked environment using logical connections via wired and/or wireless communications to one or more remote computers, such as a remote computer(s) 1050. The remote computer(s) 1050 can be a workstation, a server computer, a router, a personal computer, portable computer, microprocessor-based entertainment appliance, a peer device or other common network node, and typically includes many or all of the elements described relative to the computer 1002, although, for purposes of brevity, only a memory/storage device 1052 is illustrated. The logical connections depicted include wired/wireless connectivity to a local area network (LAN) 1054 and/or larger networks, e.g., a wide area network (WAN) 1056. Such LAN and WAN networking environments are commonplace in offices and companies, and facilitate enterprise-wide computer networks, such as intranets, all of which can connect to a global communications network, e.g., the Internet.

When used in a LAN networking environment, the computer 1002 can be connected to the local network 1054 through a wired and/or wireless communication network interface or adapter 1058. The adapter 1058 can facilitate wired or wireless communication to the LAN 1054, which can also include a wireless access point (AP) disposed thereon for communicating with the adapter 1058 in a wireless mode.

When used in a WAN networking environment, the computer 1002 can include a modem 1060 or can be connected to a communications server on the WAN 1056 via other means for establishing communications over the WAN 1056, such as by way of the Internet. The modem 1060, which can be internal or external and a wired or wireless device, can be connected to the system bus 1008 via the input device interface 1044. In a networked environment, program modules depicted relative to the computer 1002 or portions thereof, can be stored in the remote memory/storage device 1052. It will be appreciated that the network connections shown are example and other means of establishing a communications link between the computers can be used.

When used in either a LAN or WAN networking environment, the computer 1002 can access cloud storage systems or other network-based storage systems in addition to, or in place of, external storage devices 1016 as described above. Generally, a connection between the computer 1002 and a cloud storage system can be established over a LAN 1054 or WAN 1056 e.g., by the adapter 1058 or modem 1060, respectively. Upon connecting the computer 1002 to an associated cloud storage system, the external storage interface 1026 can, with the aid of the adapter 1058 and/or modem 1060, manage storage provided by the cloud storage system as it would other types of external storage. For instance, the external storage interface 1026 can be configured to provide access to cloud storage sources as if those sources were physically connected to the computer 1002.

The computer 1002 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

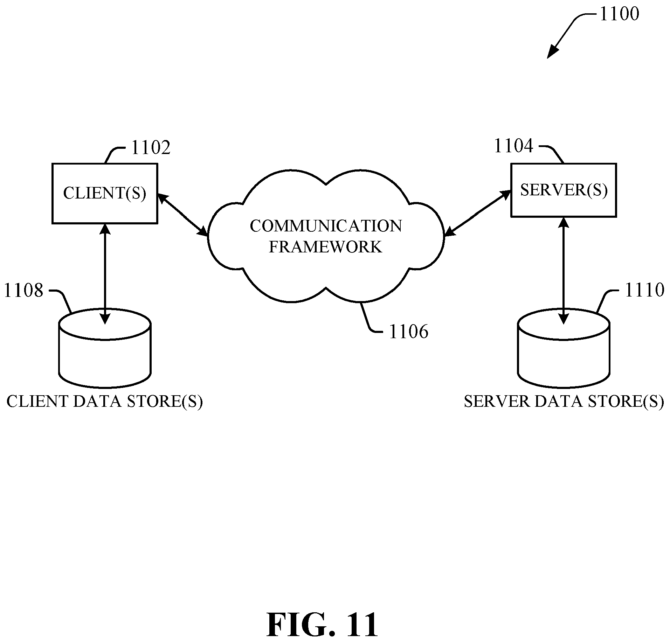

Referring now to FIG. 11, which is not a part of the invention, there is illustrated a schematic block diagram of a computing environment 1100 in accordance with this specification. The system 1100 includes one or more client(s) 1102, (e.g., computers, smart phones, tablets, cameras, PDA's). The client(s) 1102 can be hardware and/or software (e.g., threads, processes, computing devices). The client(s) 1102 can house cookie(s) and/or associated contextual information by employing the specification, for example.

The system 1100 also includes one or more server(s) 1104. The server(s) 1104 can also be hardware or hardware in combination with software (e.g., threads, processes, computing devices). The servers 1104 can house threads to perform transformations of media items by employing aspects of this disclosure, for example. One possible communication between a client 1102 and a server 1104 can be in the form of a data packet adapted to be transmitted between two or more computer processes wherein data packets may include coded analyzed headspaces and/or input. The data packet can include a cookie and/or associated contextual information, for example. The system 1100 includes a communication framework 1106 (e.g., a global communication network such as the Internet) that can be employed to facilitate communications between the client(s) 1102 and the server(s) 1104.

Communications can be facilitated via a wired (including optical fiber) and/or wireless technology. The client(s) 1102 are operatively connected to one or more client data store(s) 1108 that can be employed to store information local to the client(s) 1102 (e.g., cookie(s) and/or associated contextual information). Similarly, the server(s) 1104 are operatively connected to one or more server data store(s) 1110 that can be employed to store information local to the servers 1104. Further, the client(s) 1102 can be operatively connected to one or more server data store(s) 1110.

In one examples, a client 1102 can transfer an encoded file, (e.g., encoded media item), to server 1104. Server 1104 can store the file, decode the file, or transmit the file to another client 1102. It is noted that a client 1102 can also transfer uncompressed file to a server 1104 and server 1104 can compress the file and/or transform the file in accordance with this disclosure. Likewise, server 1104 can encode information and transmit the information via communication framework 1106 to one or more clients 1102.

The illustrated aspects of the disclosure can also be practiced in distributed computing environments where certain tasks are performed by remote processing devices that are linked through a communications network. In a distributed computing environment, program modules can be located in both local and remote memory storage devices.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature can be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

## Claims

1. A system (100), comprising:
a processor (116) that is configured to execute computer-executable components storable in a non-transitory computer-readable memory (1006), wherein the computer-executable components comprise:
a sensor component (202), comprising a LiDAR sensor, that is configured to obtain returns respectively comprising a reflectance value and a distance associated with a portion of a road;
a mapping component (204) that is configured to generate a heat map of the reflectance value with respect to the distance of the returns, the heat map being colored by occurrence intensity of the returns received;
an indexing component (206) that is configured to determine a number of the returns received by the sensor component (202) indicating a surface condition of the road; and
a road condition component (208) that is configured to determine the surface condition of the road from the heat map and the number of the returns received.

2. The system (100) of claim 1, wherein the sensor component (202) is configured to emit one or more pulsed light waves that reflect off a surface of the road to be received as reflectances by the sensor component (202) to determine the respective distances between the surface and the sensor component (202) in the returns.

3. The system (100) of claim 1, wherein the sensor component (202) is configured to emit one or more pulsed light waves that reflect off a surface of the road to be received as reflectances by the sensor component (202) to determine the respective reflectance values in the returns.

4. The system (100) of claim 1, wherein the road condition component (208) is configured to compare the reflectance values with one or more pre-defined distributions of reflectance values representing one or more surface conditions, and compare the heat map with one or more pre-defined heat maps representing one or more surface conditions to determine the surface condition.

5. The system (100) of claim 1, wherein the road condition component (208) is configured to determine that the portion of the road is dry, moist, slushy, or wet in response to receiving one or more returns with indexes of two, three, or four from one or more pulsed light waves transmitted by the sensor component (202), wherein the one or more returns are assigned with indexes based on the number of returns received by the sensor component (202).

6. The system (100) of claim 5, wherein the road condition component (208) is configured to determine that the portion of the road is snowy or icy in response to receiving one or more returns with an index of five from the one or more pulsed light waves, wherein the one or more returns are assigned with indexes based on the number of returns received by the sensor component (202).

7. The system (100) of claim 6, wherein the road condition component (208) is configured to determine that the portion of the road includes a dry surface in response to reflectance values up to 0.125 for distances greater than 10 meters between the portion of the road and the sensor component (202).

8. A computer implemented method (800) for estimating surface conditions on a road, the computer implemented method comprising:
(802) obtaining, by a system (100) according to claims 1 to 7, returns respectively comprising a reflectance value and a distance associated with a portion of a road;
(804) generating, by the system (100), a heat map of the reflectance value with respect to the distance of the returns, the heat map being colored by occurrence intensity of the returns received; and
(806) determining, by the system (100), a number of the returns received indicating a surface condition of the road; and
(810) determining, by the system (100), the surface condition of the road from the heat map and the number of the returns received.

9. The computer implemented method (802) of claim 8, further comprising:
(812) emitting, by the system (100), one or more pulsed light waves that reflect off the surface of the road as reflectances to determine the respective distances between the surface and the system (100) in the returns.

10. The computer implemented method (802) of claim 8, further comprising:
(814) emitting, by the system (100), one or more pulsed light waves that reflect off the surface of the road as reflectances to determine the respective reflectance values of the surface.

11. The computer implemented method (810) of claim 8, further comprising:
(816) comparing, by the system (100), the reflectance values with one or more predefined distributions of reflectance values representing one or more surface conditions; and comparing, by the system (100), the generated heat map with one or more pre-defined heat maps representing one or more surface conditions to determine the surface condition.

12. The computer implemented method of claim 8, further comprising:
determining, by the system (100), that the portion of the road is dry, moist, slushy, or wet in response to receiving one or more returns with indexes of two, three, or four from one or more pulsed light waves emitted towards the portion of the road, wherein the one or more returns are assigned with indexes based on the number of returns received by the system (100).

13. The computer implemented method of claim 12, further comprising:
determining, by the system (100), that the portion of the road is snowy or icy in response to receiving one or more returns with an index of five from the one or more pulsed light waves, wherein the one or more returns are assigned with indexes based on the number of returns received by the system (100).

14. The computer implemented method of claim 12, further comprising:
determining, by the system (100), that the portion of the road includes a dry surface in response to reflectance values up to 0.125 for distances greater than 10 meters between the portion of the road and the system (100).

15. A computer program product for estimating surface conditions on a road, the computer program product comprising a non-transitory computer readable memory (1006) having program instructions embodied therewith, the program instructions executable by a processor (116) of a system (100) according to claims 1 to 7 to cause the processor (116) to:
obtain returns respectively comprising a reflectance value and a distance associated with a portion of a road via a LiDAR sensor;
generate a heat map of the reflectance value with respect to the distance of the returns, the heat map being colored by occurrence intensity of the returns received;
determine a number of the returns received from the LiDAR sensor indicating a surface condition of the road; and
determine the surface condition of the road from the heat map and the number of the returns received.

## Patentansprüche

1. System (100), umfassend:
einen Prozessor (116), der dazu ausgelegt ist, computerausführbare Komponenten auszuführen, die in einem nichtflüchtigen computerlesbaren Speicher (1006) gespeichert werden können, wobei die computerausführbaren Komponenten umfassen:
eine Sensorkomponente (202), die einen LiDAR-Sensor umfasst, der dazu ausgelegt ist, Rücksignale zu erhalten,
die jeweils einen Reflexionswert und eine Distanz umfassen, die mit einem Teil einer Straße assoziiert sind;
eine Kartierungskomponente (204), die dazu ausgelegt ist, eine Heatmap des Reflexionswerts in Bezug auf die Distanz der Rücksignale zu erzeugen, wobei die Heatmap nach der Intensität des Auftretens der empfangenen Rücksignale eingefärbt ist;
eine Indizierungskomponente (206), die dazu ausgelegt ist, eine Anzahl der durch die Sensorkomponente (202) empfangenen Rücksignale zu bestimmen, die einen Oberflächenzustand der Straße angeben; und
eine Straßenzustandskomponente (208), die dazu ausgelegt ist, den Oberflächenzustand der Straße aus der Heatmap und der Anzahl der empfangenen Rücksignale zu bestimmen.

2. System (100) nach Anspruch 1, wobei die Sensorkomponente (202) dazu ausgelegt ist, eine oder mehrere gepulste Lichtwellen zu emittieren, die von einer Oberfläche der Straße reflektiert werden, um als Reflexionen durch die Sensorkomponente (202) empfangen zu werden, um die jeweiligen Distanzen zwischen der Oberfläche und der Sensorkomponente (202) in den Rücksignalen zu bestimmen.

3. System (100) nach Anspruch 1, wobei die Sensorkomponente (202) dazu ausgelegt ist, eine oder mehrere gepulste Lichtwellen zu emittieren, die von einer Oberfläche der Straße reflektiert werden, um als Reflexionen durch die Sensorkomponente (202) empfangen zu werden, um die jeweiligen Reflexionswerte in den Rücksignalen zu bestimmen.

4. System (100) nach Anspruch 1, wobei die Straßenzustandskomponente (208) dazu ausgelegt ist, die Reflexionswerte mit einer oder mehreren vordefinierten Verteilungen von Reflexionswerten zu vergleichen, die einen oder mehrere Oberflächenzuständen repräsentieren, und die Heatmap mit einer oder mehreren vordefinierten Heatmaps zu vergleichen, die einen oder mehrere Oberflächenzustände repräsentieren, um den Oberflächenzustand zu bestimmen.

5. System (100) nach Anspruch 1, wobei die Straßenzustandskomponente (208) dazu ausgelegt ist, als Reaktion auf das Empfangen eines oder mehrerer Rücksignale mit Indizes von zwei, drei oder vier von einer oder mehreren gepulsten Lichtwellen, die durch die Sensorkomponente (202) übertragen werden, zu bestimmen, dass der Teil der Straße trocken, feucht, matschig oder nass ist, wobei dem einen oder den mehreren Rücksignalen Indizes basierend auf der Anzahl von Rücksignalen zugewiesen werden, die durch die Sensorkomponente (202) empfangen werden.

6. System (100) nach Anspruch 5, wobei die Straßenzustandskomponente (208) dazu ausgelegt ist, als Reaktion auf das Empfangen eines oder mehrerer Rücksignale mit einem Index von fünf von der einen oder den mehreren gepulsten Lichtwellen zu bestimmen, dass der Teil der Straße verschneit oder vereist ist, wobei dem einen oder den mehreren Rücksignalen Indizes basierend auf der Anzahl von Rücksignalen zugewiesen werden, die durch die Sensorkomponente (202) empfangen werden.

7. System (100) nach Anspruch 6, wobei die Straßenzustandskomponente (208) dazu ausgelegt ist, als Reaktion auf Reflexionswerte bis zu 0,125 für Distanzen von mehr als 10 Metern zwischen dem Teil der Straße und der Sensorkomponente (202) zu bestimmen, dass der Teil der Straße eine trockene Oberfläche beinhaltet.

8. Computerimplementiertes Verfahren (800) zum Schätzen von Oberflächenzuständen auf einer Straße, wobei das computerimplementierte Verfahren umfasst:
(802) Erhalten, durch ein System (100) nach den Ansprüchen 1 bis 7, von Rücksignalen, die jeweils einen Reflexionswert und eine Distanz umfassen, die mit einem Teil einer Straße assoziiert sind;
(804) Erzeugen, durch das System (100), einer Heatmap des Reflexionswerts in Bezug auf die Distanz der Rücksignale, wobei die Heatmap nach der Intensität des Auftretens der empfangenen Rücksignale eingefärbt ist; und
(806) Bestimmen, durch das System (100), einer Anzahl der empfangenen Rücksignale, die einen Oberflächenzustand der Straße angeben; und
(810) Bestimmen, durch das System (100), des Oberflächenzustands der Straße aus der Heatmap und der Anzahl der empfangenen Rücksignale.

9. Computerimplementiertes Verfahren (802) nach Anspruch 8, ferner umfassend:
(812) Emittieren, durch das System (100), einer oder mehrerer gepulster Lichtwellen, die von der Oberfläche der Straße als Reflexionen reflektiert werden, um die jeweiligen Distanzen zwischen der Oberfläche und dem System (100) in den Rücksignalen zu bestimmen.

10. Computerimplementiertes Verfahren (802) nach Anspruch 8, ferner umfassend:
(814) Emittieren, durch das System (100), einer oder mehrerer gepulster Lichtwellen, die von der Oberfläche der Straße als Reflexionen reflektiert werden, um die jeweiligen Reflexionswerte der Oberfläche zu bestimmen.

11. Computerimplementiertes Verfahren (810) nach Anspruch 8, ferner umfassend:
(816) Vergleichen, durch das System (100), der Reflexionswerte mit einer oder mehreren vordefinierten Verteilungen von Reflexionswerten, die einen oder mehrere Oberflächenzustände repräsentieren; und Vergleichen, durch das System (100), der erzeugten Heatmap mit einer oder mehreren vordefinierten Heatmaps, die einen oder mehrere Oberflächenzustände repräsentieren, um den Oberflächenzustand zu bestimmen.

12. Computerimplementiertes Verfahren nach Anspruch 8, ferner umfassend:
Bestimmen, durch das System (100), dass der Teil der Straße trocken, feucht, matschig oder nass ist, als Reaktion auf das Empfangen eines oder mehrerer Rücksignale mit Indizes von zwei, drei oder vier von einer oder mehreren gepulsten Lichtwellen, die in Richtung des Teils der Straße emittiert werden, wobei dem einen oder den mehreren Rücksignale Indizes basierend auf der Anzahl von Rücksignalen zugewiesen werden, die durch das System empfangen werden (100).

13. Computerimplementiertes Verfahren nach Anspruch 12, ferner umfassend: Bestimmen, durch das System (100), dass der Teil der Straße verschneit oder vereist ist, als Reaktion auf das Empfangen eines oder mehrerer Rücksignale mit einem Index von fünf von der einen oder den mehreren gepulsten Lichtwellen, wobei dem einen oder den mehreren Rücksignalen Indizes basierend auf der Anzahl von Rücksignalen zugewiesen werden, die durch das System (100) empfangen werden.

14. Computerimplementiertes Verfahren nach Anspruch 12, ferner umfassend:
Bestimmen, durch das System (100), dass der Teil der Straße eine trockene Oberfläche beinhaltet, als Reaktion auf Reflexionswerte bis zu 0,125 für Distanzen von mehr als 10 Metern zwischen dem Teil der Straße und dem System (100).

15. Computerprogrammprodukt zum Schätzen von Oberflächenzuständen auf einer Straße, wobei das Computerprogrammprodukt einen nichtflüchtigen computerlesbaren Speicher (1006) mit damit verkörperten Programmanweisungen umfasst, wobei die Programmanweisungen durch einen Prozessor (116) eines Systems (100) nach den Ansprüchen 1 bis 7 ausführbar sind, um den Prozessor (116) zu veranlassen zum:
Erhalten von Rücksignalen, die jeweils einen Reflexionswert und eine Distanz umfassen, die mit einem Teil einer Straße assoziiert sind, über einen LiDAR-Sensor;
Erzeugen einer Heatmap des Reflexionswerts in Bezug auf die Distanz der Rücksignale, wobei die Heatmap nach der Intensität des Auftretens der empfangenen Rücksignale eingefärbt ist;
Bestimmen einer Anzahl der von dem LiDAR-Sensor empfangenen Rücksignalen, die einen Oberflächenzustand der Straße angeben; und
Bestimmen des Oberflächenzustands der Straße aus der Heatmap und der Anzahl der empfangenen Rücksignale.

## Revendications

1. Système (100), comprenant :
un processeur (116) configuré pour exécuter des composants exécutables par ordinateur stockables dans une mémoire lisible par ordinateur non transitoire (1006),
dans lequel les composants exécutables par ordinateur comprennent :
un composant capteur (202), comprenant un capteur LiDAR qui est configuré pour obtenir des retours comprenant respectivement une valeur de réflectance et une distance associées à une partie d'une route ;
un composant de cartographie (204) qui est configuré pour générer une carte thermique de la valeur de réflectance par rapport à la distance des retours, la carte thermique étant colorée par intensité d'apparition des retours reçus ;
un composant d'indexation (206) qui est configuré pour déterminer un nombre de retours reçus par le composant capteur (202) indiquant un état de surface de la route ; et
un composant d'état de route (208) qui est configuré pour déterminer l'état de surface de la route à partir de la carte thermique et du nombre de retours reçus.

2. Système (100) selon la revendication 1, dans lequel le composant capteur (202) est configuré pour émettre une ou plusieurs ondes lumineuses pulsées qui se réfléchissent sur une surface de la route pour être reçues en tant que réflectances par le composant capteur (202) pour déterminer les distances respectives entre la surface et le composant capteur (202) dans les retours.

3. Système (100) selon la revendication 1, dans lequel le composant capteur (202) est configuré pour émettre une ou plusieurs ondes lumineuses pulsées qui se réfléchissent sur une surface de la route pour être reçues en tant que réflectances par le composant capteur (202) pour déterminer les valeurs de réflectance respectives dans les retours.

4. Système (100) selon la revendication 1, dans lequel le composant d'état de route (208) est configuré pour comparer les valeurs de réflectance à une ou plusieurs distributions prédéfinies de valeurs de réflectance représentant un ou plusieurs états de surface, et comparer la carte thermique à une ou plusieurs cartes thermiques prédéfinies représentant un ou plusieurs états de surface pour déterminer l'état de surface.

5. Système (100) selon la revendication 1, dans lequel le composant d'état de route (208) est configuré pour déterminer que la partie de la route est sèche, humide, couverte de neige fondue ou mouillée en réponse à la réception d'un ou de plusieurs retours ayant des indices de deux, trois ou quatre parmi une ou plusieurs ondes lumineuses pulsées transmises par le composant capteur (202), dans lequel des indices basés sur le nombre de retours reçus par le composant capteur (202) sont attribués au ou aux retours.

6. Système (100) selon la revendication 5, dans lequel le composant d'état de route (208) est configuré pour déterminer que la partie de la route est enneigée ou verglacée en réponse à la réception d'un ou de plusieurs retours ayant un indice de cinq parmi la ou les ondes lumineuses pulsées, dans lequel des indices basés sur le nombre de retours reçus par le composant capteur (202) sont attribués au ou aux retours.

7. Système (100) selon la revendication 6, dans lequel le composant d'état de route (208) est configuré pour déterminer que la partie de la route comprend une surface sèche en réponse à des valeurs de réflectance allant jusqu'à 0,125 pour des distances supérieures à 10 mètres entre ladite partie de la route et le composant capteur (202).

8. Procédé (800) mis en œuvre par ordinateur pour estimer des états de surface sur une route, le procédé mis en œuvre par ordinateur comprenant :
(802) l'obtention, par un système (100) selon les revendications 1 à 7, de retours comprenant respectivement une valeur de réflectance et une distance associées à une partie d'une route ;
(804) la génération, par le système (100), d'une carte thermique de la valeur de réflectance par rapport à la distance des retours, la carte thermique étant colorée par intensité d'occurrence des retours reçus ; et
(806) la détermination, par le système (100), d'un nombre de retours reçus indiquant un état de surface de la route ; et
(810) la détermination, par le système (100), de l'état de surface de la route à partir de la carte thermique et du nombre de retours reçus.

9. Procédé (802) mis en œuvre par ordinateur selon la revendication 8, comprenant en outre :
(812) l'émission, par le système (100), d'une ou plusieurs ondes lumineuses pulsées qui se réfléchissent sur la surface de la route en tant que réflectances pour déterminer les distances respectives entre la surface et le système (100) dans les retours.

10. Procédé (802) mis en œuvre par ordinateur selon la revendication 8, comprenant en outre :
(814) l'émission, par le système (100), d'une ou plusieurs ondes lumineuses pulsées qui se réfléchissent sur la surface de la route en tant que réflectances pour déterminer les valeurs de réflectance respectives de la surface.

11. Procédé (810) mis en œuvre par ordinateur selon la revendication 8, comprenant en outre :
(816) la comparaison, par le système (100), des valeurs de réflectance avec une ou plusieurs distributions prédéfinies de valeurs de réflectance représentant un ou plusieurs états de surface ; et
la comparaison, par le système (100), de la carte thermique générée avec une ou plusieurs cartes thermiques prédéfinies représentant un ou plusieurs états de surface afin de déterminer l'état de surface.

12. Procédé mis en œuvre par ordinateur selon la revendication 8, comprenant en outre :
la détermination, par le système (100), du fait que la partie de la route est sèche, humide, couverte de neige fondue ou mouillée en réponse à la réception d'un ou de plusieurs retours ayant des indices de deux, trois ou quatre parmi une ou plusieurs ondes lumineuses pulsées émises vers la partie de la route, dans lequel des indices basés sur le nombre de retours reçus par le système (100) sont attribués au ou aux retours.

13. Procédé mis en œuvre par ordinateur selon la revendication 12, comprenant en outre :
la détermination, par le système (100), du fait que la partie de la route est enneigée ou verglacée en réponse à la réception d'un ou de plusieurs retours ayant un indice de cinq parmi la ou les ondes lumineuses pulsées, dans lequel des indices basés sur le nombre de retours reçus par le système (100) sont attribués au ou aux retours.

14. Procédé mis en œuvre par ordinateur selon la revendication 12, comprenant en outre :
la détermination, par le système (100), du fait que la partie de la route comprend une surface sèche en réponse à des valeurs de réflectance allant jusqu'à 0,125 pour des distances supérieures à 10 mètres entre ladite partie de la route et le système (100).

15. Produit programme d'ordinateur pour estimer des états de surface sur une route, le produit programme d'ordinateur comprenant une mémoire (1006) lisible par ordinateur non transitoire contenant des instructions de programme, les instructions de programme pouvant être exécutées par un processeur (116) d'un système (100) selon les revendications 1 à 7 pour amener le processeur (116) à :
obtenir des retours comprenant respectivement une valeur de réflectance et une distance associée à une partie d'une route par le biais d'un capteur LiDAR ;
générer une carte thermique de la valeur de réflectance par rapport à la distance des retours, la carte thermique étant colorée par intensité d'occurrence des retours reçus ;
déterminer un nombre de retours reçus du capteur LiDAR indiquant un état de surface de la route ; et
déterminer l'état de surface de la route à partir de la carte thermique et du nombre de retours reçus.
